# EUROPÄISCHE PATENTSCHRIFT

(11) **EP 1 110 609 B1**
(45) Veröffentlichungstag und Bekanntmachung des Hinweises auf die Patenterteilung: **14.03.2007**
(21) Anmeldenummer: 00127770.6
(22) Anmeldetag: 19.12.2000
(51) Int. Cl.: B01L 3/00, G01N 35/10

(54) **System zur Bearbeitung von Proben in einer Mehrkammeranordnung**
System for sample processing in a multi-chamber device
Système de traitement d'échantillons dans un dispositif à compartiments multiples

(30) Priorität: 24.12.1999 DE 19963032
(43) Veröffentlichungstag der Anmeldung: 27.06.2001
(73) Patentinhaber: Roche Diagnostics GmbH, 68305 Mannheim (DE)
(72) Erfinder: Schubert, Frank Ulrich, 6318 Walchwil (CH); Eichenlaub, Udo, Dr., 82392 Habach (DE); Tgetgel, Armin, 8932 Mettmenstetten (CH)

(56) Entgegenhaltungen:
- EP-A- 0 185 330
- EP-A- 0 843 176
- US-A- 3 912 456
- US-A- 5 324 480
- US-A- 5 842 582
- PATENT ABSTRACTS OF JAPAN vol. 008, no. 086 (P-269), 19. April 1984 (1984-04-19) & JP 59 000638 A (TOKYO SHIBAURA DENKI KK;OTHERS: 01), 5. Januar 1984 (1984-01-05)

## Beschreibung

Die vorliegende Erfindung fällt in das Gebiet der Bearbeitung von Proben, bei denen diese in einer Mehrkammeranordnung bearbeitet werden, um die Proben für eine spätere Verwendung, insbesondere eine Analyse vorzubereiten.

Pipettiervorrichtungen sind im Stand der Technik hinlänglich bekannt, so dass ihr Aufbau an dieser Stelle lediglich kursorisch beschrieben wird. Pipettiervorrichtungen weisen eine Pipettiernadel auf, in die Flüssigkeit aufgenommen wird, um diese zu transportieren, sie aus einem Gefäß zu entnehmen oder in ein Gefäß abzugeben. Der Begriff Nadel hebt auf die im Regelfall nadelförmige Gestalt der Pipettiernadel ab. Die Pipettiernadel kommuniziert mit einer Pumpe, beispielsweise einem Kolbenprober oder einer Schlauchpumpe, um Druckunterschiede in der Pipettiernadel für Pipettiervorgänge zu erzeugen. Die Pumpe ist ihrerseits mit einer Steuerungsvorrichtung verbunden, um die Pipettiervorgänge zu steuern. Weiterhin weist die Pipettiervorrichtung eine Bewegungseinrichtung auf, um zumindest die Pipettiernadel, gegebenenfalls jedoch auch eine Einheit aus Pipettiernadel und Pumpe zu bewegen. Die Bewegungsvorrichtung führt eine Bewegung der Pipettiernadel bzw. der genannten Einheit relativ zu der Mehrkammeranordnung durch. Dies umfasst sowohl eine laterale Bewegung als auch eine vertikale Bewegung zur Absenkung der Pipettiernadel in Bearbeitungskammern. Der Begriff Pipettiervorrichtung beinhaltet ein System aus Pipettiemadel, Pumpe, Steuerungsvorrichtung und Bewegungsvorrichtung oder eine Unterkombination der vorstehend genannten Einheiten.

Bei einer Bearbeitung von Proben, die Pipettierschritte umfasst, ist es seit geraumer Zeit üblich, Maßnahmen zu ergreifen, die eine gegenseitige Kontamination von Flüssigkeiten, die sich in unterschiedlichen Kammern oder Behältnissen befinden, vermeidet. Hierzu werden beispielsweise wegwerfbare Pipettenspitzen verwendet, die beim Übergang von der Bearbeitung einer ersten Flüssigkeit zur Bearbeitung einer zweiten Flüssigkeit ausgetauscht werden. Alternativ hierzu ist es natürlich auch bekannt, eine Pipettiervorrichtung beim Übergang von einer ersten Flüssigkeit zu einer zweiten Flüssigkeit durch Spülen und dergleichen zu reinigen. Diese Maßnahmen sind für klassische klinische Analyseautomaten in der Regel hinreichend. Die steigende Sensitivität von Testverfahren und auch die zunehmende Miniaturisierung in diesem Gebiet, die mit einer starken Verringerung der Flüssigkeitsvolumina einhergeht, führen dazu, dass bereits geringste Mengen an Übertrag von einer Kammer in eine andere Kammer zu erheblichen Störungen führen kann, weil beispielsweise nachfolgende Analyseergebnisse verfälscht werden. Insbesondere im Bereich der Vorbereitung nukleinsäurehaltiger Proben, die einem nachfolgenden Amplifikationsverfahren unterworfen werden, kann bereits der Übertrag eines einzelnen Moleküls Nukleinsäure von einer Kammer in eine andere Kammer zu einem vollkommen falschen Analyseergebnis führen. Dies kann einerseits durch Übertrag von positiver Probe aus einer ersten Kammer in eine negative Probe in einer zweiten Kammer erfolgen, was zu einem falsch positiven Ergebnis für die Probe in der zweiten Kammer führt. Andererseits können durch Fluidübertrag jedoch auch falsch negative Ergebnisse erzeugt werden, wenn z.B. ein Inhibitor einer Nachweisreaktion in eine Kammer eingetragen wird.

Es wurde nunmehr gefunden, dass Kontaminationen nicht nur durch Verschleppungen mittels der Pipettiervorrichtung erfolgen, sondern dass während der Pipettiervorgänge Flüssigkeitströpfchen gebildet werden können, die sich als Aerosol ausbreiten und auf diese Weise benachbarte Kammern bzw. Probengefäße kontaminieren. Derartige Kontaminationen können somit nicht durch ein Waschen der Pipettiervorrichtung oder das Verwerfen einer disposiblen Pipettiervorrichtung vermieden werden. Zur Vermeidung einer Kontamination durch Aerosolbildung wurde im Stand der Technik bereits versucht, die einzelnen Kammern mit geschlitzten Folien abzudecken, wobei die Pipettiervorrichtung durch den Schlitz in die jeweilige Kammer eingerührt wird. Es hat sich jedoch herausgestellt, dass gerade derartige Anordnungen einer Aerosolbildung Vorschub leisten, da Flüssigkeitsreste von der Pipettenspitze an die Abdeckfolie gelangen und diese beim Herausziehen der Pipettiervorrichtung in Schwingungen gerät, wodurch ein Aerosol erzeugt wird. Ein anderer Weg zur Beseitigung von Kontaminationen durch Aerosol wurde von der Fa. Precision System Science beschritten, indem eine Mehrkammeranordnung in einem System angeordnet wird, in dem ein laminarer Luftstrom so gerichtet ist, dass entstehendes Aerosol nicht in benachbarte Kammern gelangen kann. Eine derartige Anordnung ist in den Dokumenten EP A 0 843 176 und EP A 0 763 739 beschrieben. Die Erzeugung eines laminaren Luftstromes ist jedoch mit einem recht hohen, geräteseitigem Aufwand verbunden und im Übrigen können durch äußere Störungen leicht Turbulenzen in dem laminaren Luftstrom hervorgerufen werden.

US 5 842 582 offenbart ein System zur Bearbeitung von Proben in einem Mehrkammersystem, welches system für die manuellen Zugabe von Flüssigkeiten zu der Platte geeignet ist.

Aufgabe der vorliegenden Erfindung war es, die Kontamination benachbarter Kammern, in denen Pipettiervorgänge durchgeführt werden, durch Aerosolübertrag zu vermeiden, bzw. in einem Maße zu reduzieren, dass nachfolgende Prozesse mit den Flüssigkeiten nicht gestört werden. Weiterhin war es Aufgabe der Erfindung, die Kontaminationsvermeidung mit möglichst geringem Aufwand und Kosten zu erreichen, sowie die Bearbeitungsschritte möglichst wenig zu beeinflussen, bzw. zu behindern.

Die genannte Aufgabe wurde durch ein System zur Bearbeitung von Proben gemäß Anspruch 1 gelöst. Insbesondere wurde bei dem System der vorliegenden Erfindung ein bewegbarer Kontaminationsschutz vorgesehen, der zumindest eine der Kammern der Mehrkammeranordnung während eines Pipettiervorganges in dieser Kammer zumindest partiell abdeckt. Die Erfindung betrifft ein System zur Bearbeitung von Proben mit einer Mehrkammeranordnung, deren Kammern zur Aufnahme von Flüssigkeiten dienen, sowie einer Pipettiervorrichtung zur Entnahme von Flüssigkeiten aus den Kammern und / oder Abgabe von Flüssigkeit in die Kammern, wobei das System einen relativ zur Mehrkammeranordnung beweglichen, oberhalb der Öffnungen der Kammern angeordneten und zwischen den Öffnungen verschiebbaren Kontaminationsschutz besitzt, der bei einem Pipettiervorgang in einer ersten Kammer eine Kontamination einer benachbarten zweiten Kammer mit Flüssigkeit aus der ersten Kammer verhindert. Dies wird erreicht, indem der Kontaminationsschutz einen Austrag von Fluidtröpfchen aus der ersten Kammer in die zweite Kammer durch eine zumindest partielle Abdeckung bzw. einen zumindest partiellen Abschluß der ersten Kammer verhindert und der einen Abdeckungsbereich beinhaltet. Dieser Abdeckungsbereich ist dadurch charakterisiert, dass er
- im wesentlichen parallel zu den Öffnungen der Kammern angeordnet ist, wenn der Kontaminationsschutz zur Verhinderung eines Fluidaustrags aus der ersten Kammer angeordnet ist,
- er bezüglich seiner Flächenausdehnung so bemessen ist, dass die Öffnung einer Kammer unterhalb des Abdeckbereiches im Wesentlichen vollständig überdeckt wird,
- wobei er eine Öffnung aufweist, durch die die Spitze der Pipettiervorrichtung in die unterhalb des Abdeckbereiches angeordnete Kammer eingeführt werden kann und die im Abdeckbereich in Richtung der Kammeröffnung konisch zuläuft.

Zudem ist das System dadurch charakterisiert, dass es zum einen eine erste Bewegungsvorrichtung für die Pipettiervorrichtung besitzt, mit der eine Bewegung der Pipettiervorrichtung längs der Reihe der Kammern und eine Auf- und Abbewegung der Pipettiervorrichtung erfolgt und zum anderen eine zweite Bewegungsvorrichtung aufweist, die zur Bewegung des Kontaminationsschutzes relativ zu den Kammern dient.

Weiterhin betrifft die Erfindung ein Verfahren zur Bearbeitung von Proben mit dem vorstehend genannten System, sowie eine Verwendung des Systems zur Durchführung eines Bearbeitungsverfahrens.

Ein System gemäß der vorliegenden Erfindung weist zunächst eine Mehrkammeranordnung auf, in deren Kammern die Bearbeitung von Flüssigkeiten erfolgt. Derartige Mehrkammeranordnungen sind beispielsweise aus dem o.g. Patentdokument der Fa. PSS, sowie der EP A 0 884 104 bekannt. Mehrkammeranordnungen zur Bearbeitung von Fluidproben bestehen heutzutage im Regelfall aus Kunststoffen wie zum Beispiel Polyäthylen oder Polypropylen. Es sind jedoch auch Mehrkammeranordnungen aus anderen Materialien möglich. Bei der Mehrkammeranordnung kann es sich um eine Anordnung von zwei oder mehr miteinander verbundenen Kammern handeln, die beispielsweise in einer Reihe angeordnet sind. Bei den bevorzugten Ausführungsformen sind die Kammern integral miteinander verbunden, d. h. die Mehrkammeranordnung ist in einem Stück, beispielsweise im Spritzgussverfahren, gefertigt. Von der vorliegenden Erfindung sollen jedoch auch solche Anordnungen umfasst sein, bei denen die Kammern separat vorliegen und durch einen Halter bzw. Rahmen miteinander verbunden werden. Die Kammern der Mehrkammeranordnung sind in der Regel in einer Reihe angeordnet, um eine einfache Abarbeitung mit herkömmlichen automatisierten Pipettiervorrichtungen zu ermöglichen. Andererseits sind natürlich auch Anordnungen möglich, die von einer solchen linearen Anordnung abweichen. Weiterhin ist die Mehrkammeranordnung nicht darauf beschränkt, dass nur eine Zeile von Kammern vorliegt, sondern es ist sogar bevorzugt, wenn die Mehrkammeranordnung eine zweidimensionale Anordnung von Kammern aufweist.

Die einzelnen Kammern weisen im Regelfall eine zylindrische Gestalt auf und sind an der Unterseite verschlossen. Nach oben hin sind die Kammern geöffnet, um einen Zugriff auf den Kammerinhalt zu ermöglichen. Die Öffnung einer jeden Kammer ist durch den oberen Rand der Kammer gegeben. Vorzugsweise sind die Ebenen, in denen diese Öffnungen liegen, zueinander parallel und liegen auf gleicher Höhe.

Ein wesentlicher Aspekt der vorliegenden Erfindung stellt der relativ zu den Öffnungen der Kammern bewegbare Kontaminationsschutz dar. Dies bedeutet, dass einerseits der Kontaminationsschutz bewegt wird, während die Mehrkammeranordnung statisch ist oder, dass andererseits der Kontaminationsschutz raumfest ist und die Mehrkammeranordnung bewegt wird. Für einen solchen Kontaminationsschutz gibt es zwei prinzipielle Ausgestaltungen. Beide Ausgestaltungen stimmen darin überein, dass ein beweglicher Kontaminationsschutz vorgesehen ist, der einen Aerosolaustrag aus einer Kammer in der pipettiert wird, vermieden wird. Dies wird erreicht, indem Kontaminationsschutz, Kammer und Pipettiervorrichtung so gestaltet sind, dass der Pipettiervorgang selbst in einem gegen Aerosolaustrag weitgehend abgedichteten Raum erfolgt.

Bei der ersten Ausgestaltung der Erfindung ist der Kontaminationsschutz an der Pipettiervorrichtung bzw. direkt an der Pipettiernadel befestigt und wird somit zusammen mit der Pipettiervorrichtung bewegt. Bei den Pipettiervorgängen wird die Pipette in die Kammern abgesenkt und hierbei senkt sich der Kontaminationsschutz auf die Öffnung der Kammer, in der die Pipettierung erfolgt. Da die Pipette gegebenenfalls unterschiedlich tief in die Kammern eintaucht, kann es vorgesehen werden, dass der Kontaminationsschutz längs der Achse der Pipettiernadel verschiebbar ist. Dies kann beispielsweise eine aktive, mechanisch gesteuerte Verschiebung sein oder aber der Kontaminationsschutz ist relativ zur Pipettiervorrichtung federgelagert und wird beim Eindringen der Pipette in eine Kammer durch die Feder auf die Kammeröffnung gedrückt. Bei dieser ersten Ausgestaltung erfolgt eine Bewegung des Kontaminationsschutzes durch eine Bewegung der Pipettiervorrichtung

Bei einer zweiten Ausgestaltung der Erfindung ist der Kontaminationsschutz ein separates Teil, das im Regelfall mit der Mehrkammeranordnung geliefert wird. Wie weiter unten in Beschreibung der Figuren näher dargelegt wird, kann der Kontaminationsschutz eine Abdeckplatte sein, die entlang der Kammern verschoben wird. Diese Abdeckplatte ist so gestaltet, dass eine Pipettiernadel auf den Inhalt einer Kammer zugreifen kann, während die Kammeröffnung durch die Abdeckplatte abgedeckt wird, um einen Aerosolaustrag zu verhindern. Vorzugsweise besitzt die Abdeckplatte zumindest eine Ausnehmung, durch die die Pipettiervorrichtung bzw. eine Pipettiernadel hindurchtreten kann. Der Kontaminationsschutz ist so ausgestaltet, dass er die Öffnung einer Kammer, in der ein Bearbeitungsschritt vollzogen wird, im Wesentlichen abdeckt. Weiterhin ist der Kontaminationsschutz so bemessen, dass nur noch ein geringer freier Querschnitt der Kammeröffnung verbleibt, wenn sich die Pipettiernadel in der Kammer befindet. Um ein Auf setzen der Pipettiernadel auf dem Kontaminationsschutz zu verhindern, was infolge von Toleranzen auftreten kann, ist es vorteilhaft, wenn der Kontaminationsschutz eine Ausnehmung in Form eines sich nach unten verjüngenden Trichters aufweist. Es kann so gewährleistet werden, dass die Pipettenspitze den Weg in die Kammer findet und dass der verbleibende freie Querschnitt der Kammeröffnung nach dem Eindringen der Pipettenspitze nur noch klein ist. Weiterhin ist es vorteilhaft, wenn der Kontaminationsschutz nicht lediglich die Gestalt einer planparallelen Platte aufweist, sondern wenn er eine dreidimensionale Struktur aufweist, die neben einem Teil, der im wesentlichen parallel zu den Öffnungen der Kammern angeordnet ist, noch eine Barriere beinhaltet, die zwischen der Öffnung der ersten und der zweiten Kammer angeordnet ist, wenn sich der Kontaminationsschutz oberhalb der ersten Öffnung befindet. Eine solche Barriere verhindert, dass Aerosol unterhalb des Kontaminationsschutzes von einer Kammer zur anderen hindurchdringen kann. Kontaminationsschutz und Mehrkammeranordnung können auch vorteilhaft so ausgebildet sein, dass sie reversibel ineinander einrasten, wobei das Einrasten in Positionen erfolgt, bei denen sich der Kontaminationsschutz jeweils in der Weise über einer Kammer oder einer Reihe von Kammern befindet, dass er ein Herausdringen von Aerosol aus dieser Kammer verhindert bzw. zumindest verringert. Gegenüber der ersten prinzipiellen Ausgestaltung der Erfindung besitzt die zweite Ausgestaltung den Vorteil, dass auf einfache Weise eine Mehrzahl von Kammern gleichzeitig vor Kontamination geschützt werden können. Weiterhin brauchen keine besonderen Maßnahmen ergriffen zu werden, um unterschiedliche Eintauchtiefen der Pipettiernadel zu ermöglichen, bzw. um einen optimalen Kontaminationsschutz bei wechselnden Eintauchtiefen zu gewährleisten.

Bei Verwendung der zweiten Ausgestaltung der Erfindung ist es vorteilhaft, wenn die Pipettenspitze zwischen den Pipettiervorgängen nicht ganz aus der Kammer bzw. aus dem Kontaminationsschutz herausgezogen wird. Die Pipettenspitze befindet sich vorteilhaft auf Höhe des Kontaminationsschutzes oder etwas unterhalb, so dass eine gemeinsame laterale Bewegung von Pipette und Kontaminationsschutz von einer ersten Kammer zu einer zweiten Kammer möglich ist.

Zur Bewegung des Kontaminationsschutzes in einer mit den Pipettiervorgängen abgestimmten Weise, kann das System eine separate Bewegungsvorrichtung, wie beispielsweise eine Robotik zum Verfahren des Kontaminationsschutzes in einer Raumrichtung aufweisen. Weiterhin ist es möglich, zur Bewegung des verschiebbaren Kontaminationsschutzes die Bewegung der Pipettiervorrichtung heranzuziehen.

Weiterhin kann ein erfindungsgemäßes System zusätzliche Einheiten, z.B. zum analytischen Nachweis, zur Separation von Flüssigkeitsbestandteilen und zur Detektion von Flüssigkeitsspiegeln besitzen. Insbesondere kann das System Einheiten aufweisen, die sich im Bereich der Pipettiernadel befinden bzw. die an die Pipettiernadel angekoppelt werden (z.B. Magnetseparation). Diese Einheiten werden durch den Kontaminationsschutz ebenfalls vor Kontamination geschützt.

Bearbeitungsprozesse von Proben umfassen eine Vielzahl von prinzipiell im Stand der Technik bekannten Operationen. Beispielsweise können mit den Proben Aufschlußprozesse durchgeführt werden, bei denen die Herauslösung eines Analyten aus einem Trägermaterial erfolgt. Der in der klinischen Analyse gängigste Prozeß dieser Art ist eine Lyse von Zellmaterial, um im Zellplasma oder im Zellkern potentiell vorhandene Analyten freizusetzen. Weiterhin kann eine Bearbeitung Reinigungsprozesse beinhalten, bei denen der Analyt von anderen in der Probe vorhandenen Stoffen zumindest teilweise befreit wird. Ein solcher Reinigungsprozeß ist insbesondere im Bereich der Nukleinsäureanalytik von Vorteil, um eine Störung des Nachweises durch die unter Umständen mengenmäßig überlegene Zahl ähnlicher Nukleinsäuren zu vermeiden. Solch ein Reinigungsprozess erfolgt vorteilhaft durch spezifische Bindung des Analyten an eine Festphase, z.B. Glassbeads mit darauf immobilisierten Oligonukleotiden zur Bindung der Analytmoleküle durch Hybridisierung. Demgemäß umfasst die Bearbeitung auch eine sogenannte "bound-free"-Trennung, bei der die Festphase mit darauf befindlichem Analyt von der flüssigen Phase getrennt wird. Eine "Bound free"-Trennung kann vorteilhaft darin bestehen, dass als Festphase magnetisierbare Beads eingesetzt werden, die durch Anlegen eines Magnetfeldes festgehalten werden, während die flüssige Phase abgetrennt wird. Diese Abtrennung kann vorteilhaft in der Pipettenspitze selbst erfolgen, wie dies in der EP B 0 737 110 beschreiben ist. Nach einer Abtrennung des Analyten an der Festphase erfolgen in der Regel noch Waschschritte der Festphase, wobei es vorteilhaft ist, abwechselnde die Partikel zu immobilisieren und Waschflüssigkeit zu resuspendieren, um eine hohe Wascheffizienz zu erzielen. Die gewaschene Festphase wird nach etwaigen Waschschritten eluiert, d. h. der Analyt wird von der Festphase abgelöst und in die flüssige Phase überführt. Des Weiteren kann die Flüssigkeit auch bearbeitet werden, indem durch Zugabe von Reagenzien chemische Prozesse durchgeführt werden. Die bearbeitete Probe kann nun direkt einer Analyse zugeführt werden oder aber es kann im Falle von Nukleinsäuren eine Amplifikation durchgeführt werden. Die Bearbeitung im sinne der vorliegenden Erfindung umfasst jedoch nicht nur Probenvorbereitungen für eine Analyse, es sollen auch solche Bearbeitungen umfasst sein, die beispielsweise ein gereinigtes Produkt zur Herstellung eines Arzneimittels oder dergleichen als Ergebnis haben. Die oben genannten Bearbeitungsschritte sind lediglich zur Illustration gedacht bzw. um bevorzugte Ausführungsformen zu schildern. Die Erfindung umfasst somit auch andersartige Bearbeitungen von Proben.

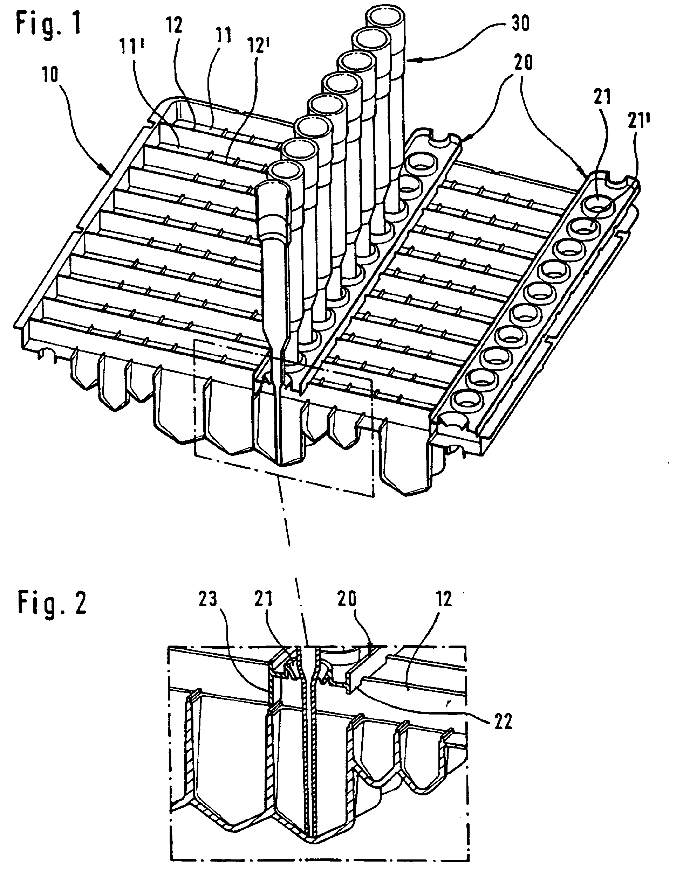

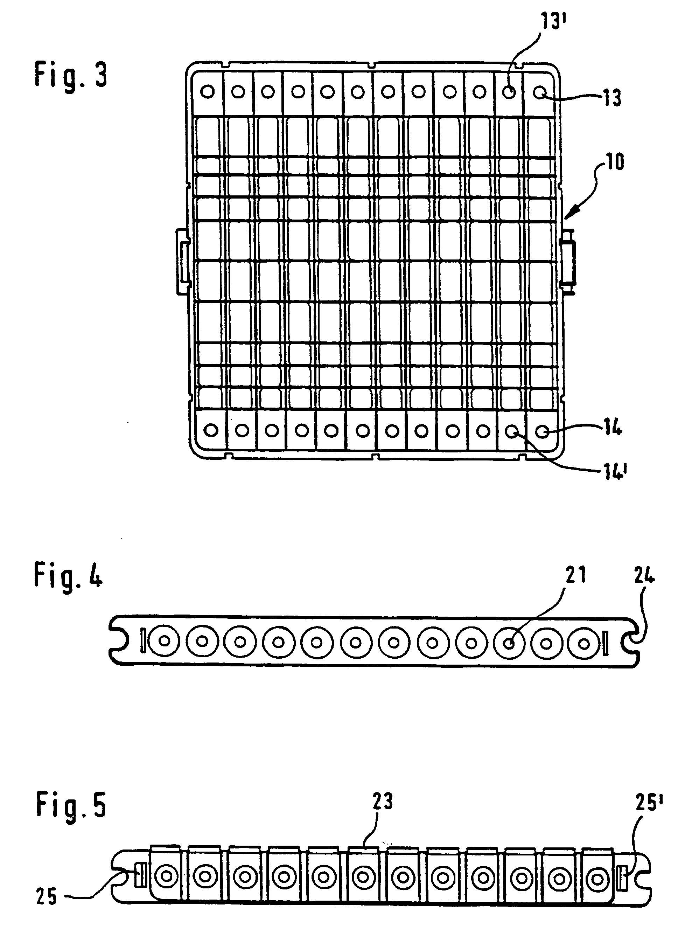

Die vorliegende Erfindung wird nunmehr anhand einiger Figuren näher erläutert:
Figur 1:
   Mehrkammeranordnung und Kontaminationsschutz sowie Pipettenspitzen
Figur 2:
   Ausschnittsvergrößerung aus Figur 1 mit einer Kammer und deren partieller Abdichtung durch den Kontaminationsschutz
Figur 3:
   Aufsicht auf eine Mehrkammeranordnung
Figur 4:
   Aufsicht auf den Kontaminationsschutz
Figur 5:
   Unterseite des Kontaminationsschutzes aus Figur 4
Figur 6:
   Pipette mit Kontaminationsschutz

Figur 1 zeigt die perspektivische Darstellung einer Mehrkammeranordnung (10) und ein relativ zu der Mehrkammeranordnung bewegbaren Kontaminationsschutz (20). Aus Figur 1. ist zu erkennen, dass die Mehrkammeranordnung aus einer Vielzahl von in Reihe angeordneten Kammern besteht, wobei wiederum mehrere Reihen nebeneinander vorhanden sind, so dass sich eine zweidimensionale Anordnung von Kammern ergibt. Bei Verfahren zur Probenvorbereitung wird in der Regel Probe vorgelegt und diese in verschiedenen Schritten bearbeitet, wobei ein Flüssigkeitstransfer von einer Kammer in eine andere Kammer, in der Regel in die benachbarte Kammer erfolgt. Die Abarbeitung erfolgt in der Anordnung gemäß Figur 1 parallel zueinander in 10 Reihen. Figur 1 lässt weiterhin erkennen, dass die einzelnen Kammern in einer Reihe nicht notwendigerweise das gleiche Fassungsvermögen aufweisen, sondern dass es bedingt durch das angewandte Bearbeitungsverfahren vorteilhaft sein kann, unterschiedlich große Kammern vorzusehen. Weiterhin ist aus Figur 1 erkennbar, dass benachbarte Reihen (11, 11') durch Stege (12, 12') voneinander getrennt sind. Diese Stege stellen einen ersten Schutz dar, um einen Übertrag von Flüssigkeit oder Aerosol von einer Reihe in eine benachbarte Reihe zu verhindern. Auf diesen Stegen liegt weiterhin der Kontaminationsschutz (20) auf. In der Figur 1 sind zur Illustration zwei Kontaminationsschutze (20) dargestellt. In der praktischen Anwendung wird jedoch im Regelfall nur ein Kontaminationsschutz eingesetzt werden. Es ist auch zu erkennen, dass der Kontaminationsschutz Ausnehmungen (21, 21') aufweist, durch die die Pipettenspitzen (30) zur Pipettierung hindurchgeführt werden. Aus der Figur 1 oder besser aus der Figur 2 ist zu erkennen, dass diese Ausnehmungen die Form eines sich nach unten verjüngenden Trichters aufweisen. Es kann so sichergestellt werden, dass die Pipettenspitze auch bei ungenauer Positionierung bzw. Bauteiltoleranzen durch die Ausnehmung hindurchgeführt werden. Weiterhin ist aus den Figuren 1 und 2 zu entnehmen, dass die Ausnehmungen im Kontaminationsschutz durch die Pipetten im Wesentlichen verschlossen werden, so dass im Wesentlichen kein Aerosol nach außen dringen kann. Im dargestellten Fall wird dies erreicht, indem sich die Pipettenspitze in dem Bereich, der während des Pipettiervorganges in der Ausnehmung zu liegen kommt, verdickt. Dies ist vorteilhaft, jedoch nicht notwendigerweise erforderlich. Der Kontaminationsschutz besitzt eine Barriere (23), die im Wesentlichen senkrecht zur Öffnung der Gefäße angeordnet ist. Diese Barriere ist so weit heruntergezogen, dass sie bis fast auf die Höhe der Gefäßöffnungen reicht. Hierdurch wird quasi eine Kammer gebildet, in der der Pipettiervorgang ablaufen kann und aus der im Wesentlichen kein Aerosol mehr in die nachfolgende Kammer austreten kann. Derartige Barrieren können auf beiden Seiten des Kontaminationsschutzes vorgesehen werden. Im Regelfall ist es jedoch ausreichend, lediglich auf der Seite, in der die Vorschubbewegung des Kontaminationsschutzes erfolgt, eine Barriere vorzusehen, so dass in der Bearbeitung nachfolgende Kammern vor einer Kontamination geschützt werden.

Figur 3 zeigt die in Figur 1 abgebildete Mehrkammeranordnung in Aufsicht. Neben den bereits genannten Merkmalen ist zu erkennen, dass die Mehrkammeranordnung Ausnehmungen (13, 13') aufweist, die als Einstellposition für separate Gefäße dienen. Dies ist vorteilhaft, um eine zu bearbeitende Probe in die Anordnung einzubringen, da sie so einfach mit dem Gefäß, in dem sie sich bereits befindet, in eine Aufnahmeposition eingestellt werden kann. An der gegenüberliegenden Seite der jeweiligen Reihe von Bearbeitungskammern befinden sich wiederum Aufnahmepositionen (14, 14') für ein separates Gefäß, in denen die Probe nach Bearbeitung aufgefangen werden kann. Es ist somit einfach möglich, die bearbeitete Probe durch Herausnehmen des separaten Gefäßes anderen Vorrichtungen, insbesondere Thermocyclern oder Analysevorrichtungen zuzuführen.

In der Figur 4 ist der bereits in Figur 1 gezeigte Kontaminationsschutz separat von der Oberseite dargestellt. Neben den bereits erwähnten Merkmalen ist hier noch zu erkennen, dass der Kontaminationsschutz an seinen beiden Enden Einkerbungen (24) aufweist, in die Führungselemente einer Bewegungsvorrichtung eingreifen können, um den Kontaminationsschutz zu transportieren. In der Ansicht des Kontaminationsschutzes von der Unterseite in Figur 5 sind nochmals die Barrieren (23) zu erkennen, die eine Aerosolausbreitung in Richtung späterer Bearbeitungskammem verhindern. Weiterhin ist zu erkennen, dass der Kontaminationsschutz Rastelemente (25) aufweist, mit denen er an dem Rand der Mehrkammeranordnung befestigt wird, so dass eine vollständige Ablösung des Kontaminationsschutzes von der Mehrkammernanordnung gehindert, jedoch ein Verschieben entlang der Reihen der Kammern weiterhin möglich ist.

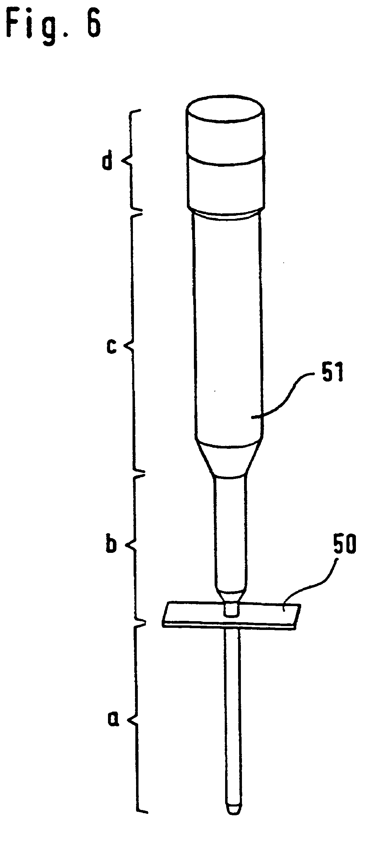

Figur 6 zeigt einen Kontaminationsschutz gemäß der ersten Ausgestaltung der Erfindung. Der Kontaminationsschutz (50) ist an der Pipette (51) befestigt. Die dargestellte Anordnung kann vorzugsweise integral in einem Spritzgussprozess gefertigt werden. Der Kontaminationsschutz (50) ist so gestaltet, dass er während eines Pipettiervorganges in einer Kammer die Öffnung dieser Kammer im Wesentlichen abdeckt. Die in Figur 6 dargestellte Anordnung aus Pipette und Kontaminationsschutz kann zusammen mit der in Figur 3 dargestellten Mehrkammeranordnung verwendet werden. Die in Figur 6 dargestellte Pipette weist mehrere Dickenbereiche auf. Bereich (a) hat einen kleinen Querschnitt, damit die Pipette gut in Öffnungen eingeführt werden kann. Der Dickenbereich (b) hat einen größeren Querschnitt, um hier größere Flüssigkeitsmengen aufnehmen zu können und um eine gegenüber Bereich (a) verringerte Strömungsgeschwindigkeit bei Pipettiervorgängen zu erzielen. Dies ist günstig, um hier magnetische Separationen durchzuführen, zumal die Gefahr einer ungewollten Aufwirbelung von an der Innenwand separierten Magnetpartikeln gering ist als auch um eine vollständige Durchdringung des Querschnittes durch ein Magnetfeld zu gewährleisten. Bereich (c) weist einen noch größeren Querschnitt als Bereich (b) auf, um mit der Pipette ausreichend große Flüssigkeitsmengen aufnehmen zu können. Der Bereich (d) dient zur Aufnahme der disposiblen Pipettenspitze durch den Anschluss einer Pipettiervorrichtung.

### Zusammenfassung

System zur Bearbeitung von Proben, insbesondere zur Bearbeitung nukleinsäurehaltiger Proben mit einer Mehrkammeranordnung deren Kammern zur Aufnahme von Flüssigkeiten dienen, sowie einer Pipettiervorrichtung zur Entnahme von Flüssigkeiten aus den Kammern und / oder Abgabe von Flüssigkeit in die Kammern, dadurch gekennzeichnet, dass das System einen relativ zur Mehrkammeranordnung beweglichen Kontaminationsschutz besitzt, der bei einem Pipettiervorgang in einer ersten Kammer eine Kontamination einer benachbarten zweiten Kammer mit Flüssigkeit aus der ersten Kammer verhindert, indem er einen Austrag von Fluidtröpfchen aus der ersten Kammer in die zweite Kammer durch eine zumindest partielle Abdeckung der ersten Kammer verhindert.

## Patentansprüche

1. System zur Bearbeitung von Proben, mit einer Mehrkammeranordnung (10), deren Kammern zur Aufnahme von Flüssigkeiten dienen, sowie einer Pipettiervorrichtung (30) zur Entnahme von Flüssigkeiten aus den Kammern und / oder Abgabe von Flüssigkeit in die Kammern, wobei
- das System einen relativ zur Mehrkammeranordnung beweglichen oberhalb der Öffnungen der Kammern angeordneten und zwischen den Öffnungen verschiebbaren Kontaminationsschutz (20) sowie eine Bewegungsvorrichtung zur Bewegung des Kontaminationsschutzes relativ zu den Kammern besitzt, wobei der Kontaminationsschutz bei einem Pipettiervorgang in einer ersten Kammer eine Kontamination einer benachbarten zweiten Kammer mit Flüssigkeit aus der ersten Kammer verhindert, indem er einen Austrag von Fluidtröpfchen aus der ersten Kammer in die zweite Kammer durch eine zumindest partielle Abdeckung der ersten Kammer verhindert und der einen Abdeckbereich beinhaltet,
- der im Wesentlichen parallel zu den Öffnungen der Kammern angeordnet ist, wenn der Kontaminationsschutz zur Verhinderung eines Fluidaustrags aus der ersten Kammer angeordnet ist,
- der bezüglich seiner Flächenausdehnung so bemessen ist, dass die Öffnung einer Kammer unterhalb des Abdeckbereiches im Wesentlichen vollständig überdeckt wird,
und der **dadurch gekennzeichnet ist dass**
- der Abdeckbereich eine Öffnung aufweist, durch die die Spitze der Pipettiervorrichtung in die unterhalb des Abdeckbereiches angeordnete Kammer eingeführt werden kann und die im Abdeckbereich in Richtung der Kammeröffnung konisch zuläuft,
und das System **dadurch gekennzeichnet ist, dass**
- es eine Bewegungsvorrichtung für die Pipettiervorrichtung besitzt, mit der eine Bewegung der Pipettiervorrichtung längs der Reihe der Kammern und eine Auf- und Abbewegung der Pipettiervorrichtung erfolgt.

2. System gemäß Anspruch 1, bei dem die Kammern in einer Reihe angeordnet sind.

3. System gemäß Anspruch 1bei dem der Kontaminationsschutz eine Barriere beinhaltet, die zwischen der Öffnung der ersten und der zweiten Kammer angeordnet ist.

4. System gemäß Anspruch 1, bei dem die Mehrkammeranordnung Rastelemente aufweist, in die Rastelemente des Kontaminationsschutzes reversibel eingreifen, so dass eine Verschiebung des Kontaminationsschutzes längs der Kammern gehindert ist.

5. System gemäß Anspruch 1, bei dem die Mehrkammeranordnung zwei oder mehr Zeilen von in Reihe angeordneten Kammern aufweist.

6. System gemäß. Anspruch 1, der Kontaminationsschutz ein von der Pipettiervorrichtung separates Bauteil ist.

7. Verfahren zur Bearbeitung von Proben, bei dem ein System gemäß Anspruch 1 verwendet wird.

8. Verwendung eines Systems gemäß Anspruch 1zur Bearbeitung von Proben.

9. Verwendung gemäß Anspruch 8, bei dem die Bearbeitung zur Isolierung und Reinigung von Nukleinsäuren erfolgt.

## Claims

1. System for processing samples comprising a multichamber arrangement (10) the chambers of which are used to receive liquids and a pipetting device (30) to remove liquids from the chambers and/or to dispense liquid into the chambers, wherein
- the system has a contamination protection (20) which can move relative to the multichamber arrangement and is arranged above the openings of the chambers and can be moved between the openings and it has a moving device to move the contamination protection relative to the chambers, wherein the contamination protection prevents an adjacent second chamber from being contaminated with liquid from the first chamber during a pipetting operation in the first chamber by preventing discharge of liquid droplets from the first chamber into the second chamber by an at least partial covering of the first chamber and which comprises a cover region,
- which is arranged essentially parallel to the openings of the chambers when the contamination protection is disposed to prevent liquid discharge from the first chamber,
- the surface dimensions of which are such that it essentially completely covers the opening of a chamber below the cover region
and which is **characterized in that**
- the cover region has an opening through which the tip of the pipetting device can be introduced into the chamber located below the cover region and which is conically tapered towards the chamber opening in the cover region
and the system is **characterized in that**
- it has a moving device for the pipetting device which allows the pipetting device to be moved along the row of chambers and allows an upwards and downwards movement of the pipetting device.

2. System according to claim 1,
in which the chambers are arranged in a row.

3. System according to claim 1,
in which the contamination protection comprises a barrier which is arranged between the opening of the first and the second chamber.

4. System according to claim 1,
in which the multichamber arrangement has latching elements into which latching elements of the contamination protection reversibly engage thus preventing displacement of the contamination protection along the chambers.

5. System according to claim 1,
in which the multichamber arrangement has two or more lines of chambers arranged in a row.

6. System according to claim 1,
wherein the contamination protection is a separate component from the pipetting device.

7. Method for processing samples,
in which a system according to claim 1 is used.

8. Use of a system according to claim 1 to process samples.

9. Use according to claim 8, in which the processing is carried out to isolate and purify nucleic acids.

## Revendications

1. Système de traitement d'échantillons, avec un dispositif à plusieurs compartiments (10), dont les compartiments servent à recevoir des liquides, ainsi qu'un dispositif de pipetage (30) pour prélever des liquides à partir des compartiments et/ou pour introduire des liquides dans les compartiments, dans lequel
- le système possède une protection contre la contamination (20), mobile relativement à la disposition à plusieurs compartiments, disposée au-dessus des ouvertures des compartiments et pouvant être déplacée entre les ouvertures, ainsi qu'un dispositif de déplacement pour déplacer la protection contre la contamination par rapport aux compartiments, la protection contre la contamination empêchant, dans un processus de pipetage, dans un premier compartiment une contamination d'un second compartiment voisin avec un liquide provenant du premier compartiment, en empêchant le déversement de gouttelettes de fluide provenant du premier compartiment dans le second compartiment grâce à un recouvrement au moins partiel du premier compartiment et comprenant une zone de recouvrement
- qui est disposée sensiblement parallèlement aux ouvertures des compartiments lorsqu'est mise en place la protection contre la contamination afin d'empêcher un déversement de liquide provenant du premier compartiment,
- qui est dimensionnée, quant à sa surface, de manière que l'ouverture d'un compartiment soit sensiblement entièrement recouverte en-dessous de la zone de recouvrement,
et qui est **caractérisée en ce que**
- la zone de recouvrement présente une ouverture à travers laquelle on peut introduire la pointe du dispositif de pipetage dans le compartiment disposé en-dessous de la zone de recouvrement et qui, dans la zone de recouvrement, s'étend en cône dans la direction de l'ouverture du compartiment,
le système étant **caractérisé en ce que**
- il possède un dispositif de déplacement pour le dispositif de pipetage, avec lequel on procède à un déplacement du dispositif de pipetage le long de la série des compartiments, et on actionne un mouvement ascendant et descendant du dispositif de pipetage.

2. Système selon la revendication 1, dans lequel les compartiments sont disposés en une série.

3. Système selon la revendication 1, dans lequel la protection contre la contamination contient une barrière qui est disposée entre les ouvertures du premier et du second compartiments.

4. Système selon la revendication 1, dans lequel la disposition à plusieurs compartiments présente des éléments d'arrêt, où les éléments d'arrêt pénètrent de façon réversible dans la protection contre la contamination, de manière à empêcher tout déplacement de la protection contre la contamination le long des compartiments.

5. Système selon la revendication 1, dans lequel la disposition à plusieurs compartiments présente une ou plusieurs lignes de compartiments disposés en série.

6. Système selon la revendication 1, dans lequel la protection contre la contamination est une pièce séparée du dispositif de pipetage.

7. Procédé de traitement d'échantillons dans lequel on utilise un système selon la revendication 1.

8. Utilisation d'un système selon la revendication 1 pour le traitement d'échantillons.

9. Utilisation selon la revendication 8, dans laquelle on procède au traitement en vue d'isoler et de purifier des acides nucléiques.
